# EUROPÄISCHE PATENTANMELDUNG

(11) **EP 3 385 223 A1**
(43) Veröffentlichungstag der Anmeldung: **10.10.2018**
(21) Anmeldenummer: 17165034.4
(22) Anmeldetag: 05.04.2017
(51) Int. Cl.: C01B 33/107, B01J 19/08, H05H 1/46

(54) **VERFAHREN ZUR ABTRENNUNG VON BROM, JOD, BROM UND/ODER JOD ENTHALTENDEN VERBINDUNGEN AUS CHLORSILANEN**

(71) Anmelder: Evonik Degussa GmbH, 45128 Essen (DE)
(72) Erfinder: LANG, Jürgen Edwin, 76229 Karlsruhe (DE); RAULEDER, Hartwig, 79618 Rheinfelden (DE)

(57) **Zusammenfassung**

Die Erfindung betrifft ein Verfahren zur Abtrennung von Brom, Brom und/oder Jod enthaltenden Silicium-Verbindungen aus Zusammensetzungen von Chlorsilanen enthaltend Brom, Brom und/oder Jod enthaltende Silicium-Verbindungen, indem die Zusammensetzung einem nichtthermischen Plasma ausgesetzt wird und anschließend die Chlorsilane durch Destillation von den erhaltenden Brom und/oder Jod enthaltenden Verbindungen abgetrennt werden können.

## Beschreibung

Die Erfindung betrifft ein Verfahren zur Abtrennung von Brom, Jod, Brom und/oder Jod enthaltenden Verbindungen aus Zusammensetzungen von Chlorsilanen enthaltend Brom, Jod, Brom und/oder Jod enthaltende Verbindungen, indem die Zusammensetzung einem nichtthermischen Plasma ausgesetzt wird und anschließend die Chlorsilane durch Destillation von den erhaltenden Brom und/oder Jod enthaltenden Verbindungen abgetrennt werden können.

Chlorsilane, die in der Mikroelektronik zum Einsatz kommen, wie beispielsweise zur Herstellung von hochreinem Silicium mittels Epitaxie oder Siliciumnitrid (SiN), Siliciumoxid (SiO), Siliciumoxynitrid (SiON), Siliciumoxycarbid (SiOC) oder Siliciumcarbid (SiC), müssen besonders hohe Anforderungen an ihre Reinheit erfüllen. Dies gilt insbesondere bei der Herstellung dünner Schichten dieser Materialien. Im genannten Anwendungsgebiet stören schon Verunreinigungen der Ausgangsverbindungen im ppb- bis ppt-Bereich. Chlorsilane, insbesondere hochreine Chlorsilane, bilden eine wichtige Produktklasse in vielen Anwendungsgebieten, wie der Halbleiterindustrie oder Lichtwellenleiterindustrie. Als besonders negativ erweisen sich Kontaminationen der Chlorsilane mit anderen Halogenen oder anderen Halogenverbindungen, z. B. Brom und/oder bromhaltige Verbindungen. Solche Kontaminationen können selbst im unteren ppm-Bereich und sogar bis ppb-Bereich äußerst störend in den technischen Chlorsilan-Anwendungen sein.

Beispielsweise sind Tetrachlorsilan und Hexachlordisilian, in der geforderten Reinheit, im Bereich der Elektronik, der Halbleiterindustrie als auch in der pharmazeutischen Industrie begehrte Ausgangsverbindungen.

Zur Herstellung der genannten hochreinen Verbindungen Siliciumnitrid, Siliciumoxid, Siliciumoxynitrid, Siliciumoxycarbid oder Siliciumcarbid, insbesondere von Schichten dieser Verbindungen, werden Tetrachlorsilan und Hexachlordisilan durch Reaktion mit weiteren stickstoff-, sauerstoff- oder kohlenstoffhaltigen Precusoren umgesetzt. Auch zur Herstellung epitaktischer Silicium-Schichten, mittels Niedrigtemperaturepitaxie, werden Tetrachlorsilan oder Hexachlordisilan verwendet.

Es bestand die Aufgabe ein Verfahren zu entwickeln, dass die zuverlässige und vorzugsweise kontinuierliche Abtrennung von Brom, Jod, Brom und/oder Jod enthaltenden Verbindungen zu ermöglichen. Ein Problem bestand darin, dass die Brom und/oder Jod enthaltenden Verbindungen ähnliche Siedepunkte wie die Chlorsilane aufweisen können, so dass eine destillative Abtrennung nicht möglich ist. Zudem sind äußerst niedrigen Gehalte an diesen Verunreinigungen mittels Destillation als alleinige Reinigungsmethode nicht zugänglich.

Gelöst wird die Aufgabe durch das erfindungsgemäße Verfahren entsprechend den Merkmalen der Patentansprüche 1 sowie durch die Verwendung nach Anspruch 13.

Überraschend wurde gefunden, dass diese Aufgabe gelöst werden kann, indem ein Chlorsilan-Massenstrom, der die vorgenannten Verunreinigungen umfassend Brom und/oder Jod enthält, mittels eines nicht-thermischen Plasmas synonym zu kaltem Plasma behandelt wird. Der Chlorsilan Massenstrom, welcher vorzugsweise SiCl₄ sowie die Verunreinigungen mit anderen Halogenen oder andere Halogenverbindungen enthält, z. B. Brom und/oder bromhaltige Verbindungen, wird in einer Plasmaentladungsanordung, bevorzugt einem Ozonisator, zugeführt und dort im kalten Plasma zur Reaktion gebracht.

Durch die erfindungsgemäße Behandlung im nicht-thermischen Plasma wird der Chlorsilan-Massenstrom dahingehend behandelt, dass er einer destillativen Aufreinigung und Abtrennung der anderen Halogenverbindungen, wie Brom und Jod, zugänglich gemacht wird. Hinsichtlich der Wirkung der Plasmabehandlung wird von einer Begünstigung der Kinetik dahingehend ausgegangen, dass plasmachemisch Chlorradikale gebildet werden, die selektiv Brom und Jod an den entsprechenden Halogenverbindungen substituieren, so dass eine Siedpunktsveränderung der Verbindungen resultiert, die den Massenstrom einer destillativen Aufarbeitung zugänglich macht.

Gegenstand der Erfindung ist ein Verfahren zur Abtrennung von anderen Halogenen oder andere Halogenverbindungen, insbesondere Brom, Brom enthaltenden Verbindungen, vorzugsweise Brom und/oder Jod enthaltenden Silicium-Verbindungen der allgemeinen Formel **III,** insbesondere von HSiCl₂Br und/oder HSiClBr₂,

SiHal₄₋ₙHₙ (**III**)

aus Zusammensetzungen von Chlorsilanen, wobei die Chlorsilane umfassen
- mindestens ein Chlorsilan der allgemeinen Formel **I**,

   SiCl₄ (**I**),
- Polyperchlorsilane der allgemeinen Formel **II** 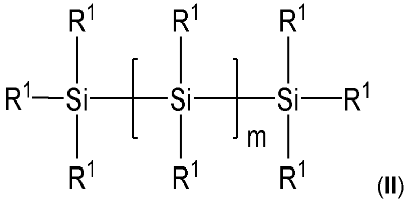 mit R¹ jeweils Chlor und mit m = 0, 1, 2, 3, 4 bis 100,
- verzweigte Polyperchlorsilane und/oder cyclische Polyperchlorsilane und/oder Gemische der vorgenannten Chlorsilane,
   indem
   (i) die Zusammensetzung von Chlorsilanen in den gasförmigen Zustand überführt wird und
   (ii) einem Plasma, insbesondere einem nicht-thermischen Plasma, ausgesetzt wird und eine umgesetzte Zusammensetzung von Chlorsilanen erhalten wird,
   (iii) Destillieren der umgesetzten Zusammensetzung von Chlorsilanen, und
   (iv) Erhalten einer Zusammensetzung von Chlorsilanen deren Gehalt an Brom, Brom und/oder
Jod enthaltenden Silicium-Verbindungen vermindert ist.

Überraschend können Zusammensetzungen von Chlorsilanen erhalten werden, deren Gehalt an Brom, Brom und/oder Jod enthaltenden Silicium-Verbindungen vermindert ist. Diese Zusammensetzungen weisen eine Reinheit und auch höchste Reinheit an isolierbaren Chlorverbindungen auf. Eine Zusammensetzung umfassend Chlorsilane weist eine hohe Reinheit auf, wenn Verunreinigungen nur im ppb-Bereich vorliegen; unter höchster Reinheit werden Verunreinigungen mit einem Gehalt von kleiner gleich 0,05 Gew.-ppm- verstanden.

Bevorzugt weist die Zusammensetzung im Verfahrensschritt (iv) einen Gehalt von kleiner gleich 1 Gew.-ppm an Brom, Brom und/oder Jod enthaltenden Silicium-Verbindungen auf, insbesondere ist der Gehalt an Brom kleiner gleich 1 Gew.-ppm. Vorzugsweise liegt der Gehalt an Brom, Brom und/oder Jod enthaltenden Silicium-Verbindungen bei kleiner gleich 0,5 Gew.-ppm, bevorzugt kleiner gleich 0,11 Gew.-ppm, besonders bevorzugt kleiner gleich 0,05 Gew.-ppm, wobei ein Gehalt an Brom von kleiner gleich 0,05 Gew.-ppm besonders bevorzugt ist.

Die nach dem erfindungsgemäßen Verfahren hergestellten Zusammensetzungen umfassend Chlorsilane sind zur Anwendung in der Halbleiterindustrie oder pharmazeutischen Industrie geeignet.

Im Verfahrensschritt (ii) wird die erhaltene umgesetzte Zusammensetzung von Chlorsilanen vorzugsweise nach ein bis mehreren Durchläufen durch das nicht-thermische Plasma kondensiert. Die so erhaltene flüssige umgesetzte Zusammensetzung von Chlorsilanen kann anschließend zur Abtrennung der Chlorsilane von den Brom, Brom und/oder Jod enthaltenden Silicium-Verbindungen destilliert werden.

Die in dem Verfahren einzusetzenden Zusammensetzungen der Chlorsilane können beispielsweise als Brom und/oder Jod enthaltende Silicium-Verbindungen Halogensilane der allgemeinen Formel **III** enthalten, mit SiHal₄₋ₙHₙ (**III**), wobei mindestens ein Hal ausgewählt ist aus Brom und Jod und optional weitere Hal jeweils unabhängig ausgewählt sind aus Chlor, Brom und Jod mit n = 0, 1, 2 oder 3. Beispielsweise kann die Brom und/oder Jod enthaltende Silicium-Verbindung aus den Halogensilanen der allgemeinen Formel **III** HSiCl₂Br oder HSiClBr₂ ausgewählt sein, vorzugsweise ist es HSiCl₂Br.

Ebenso können die Brom und/oder Jod enthaltenden Silicium-Verbindungen lineare, verzweigte und/oder cyclische Polyhalogensilane sein, wie lineare Polyhalogensilane der Formel III mit R² jeweils unabhängig ausgewählt aus Halogen umfassend Chlor, Brom und Jod und Wasserstoff, wobei die R² identische oder unterschiedliche Reste bezeichnet, wobei mindestens ein R² gleich Halogen ist und mit y = 0, 1, 2, 3, 4 bis 100, insbesondere y = 0, 1, 2, 3, 4, 5, 6 bis 10.

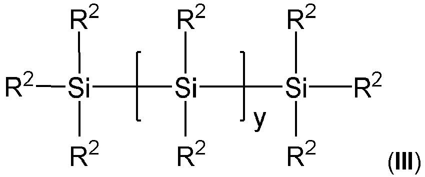

In Bezug auf die umgesetzten Brom und/oder Jod enthaltenden Silicium-Verbindungen im Verfahrensschritt (iii) ist es bevorzugt, wenn diese sich in einem Auffangbehälter einer Vorrichtung zur Durchführung des Verfahrens anreichern. Eine entsprechende Anreicherung ist möglich, da durch Substitution von Wasserstoff durch ein Chloratom oder auch der Substitution von Brom durch Chlor oder Jod durch Chlor oder auch die Bildung von Dimeren sich Verbindungen mit veränderten Siedepunkten bilden.

Die Brom und/oder Jod enthaltenden Silicium-Verbindungen umfassen Brom enthaltende Silane, Jod enthaltende Silane, Brom und Jod enthaltende Silane und/oder Mischungen umfassend mindestens zwei der vorgenannten Verbindungen.
Der Verfahrensschritt (ii), die nichtthermische Plasmabehandlung, erfolgt vorzugsweise bei Drücken von 1 bis 1000 mbar_{abs}., vorzugsweise von 100 bis 800 mbar_{abs}., besonders bevorzugt von 100 bis 500 mbar_{abs}.

Entsprechend einer bevorzugten Ausführungsform können die Verfahrensschritte (ii) und optional (iii) kontinuierlich erfolgen.

Nach einer bevorzugten Ausführungsform wird als Chlorsilan der allgemeinen Formel **I** Siliciumtetrachlorid mit n = 0 einem nicht-thermischen Plasma ausgesetzt. Nach einer weiteren bevorzugten Ausführungsform kann Hexadichlorsilan der Formel **II** mit n = 0 einem nichtthermischen Plasma ausgesetzt werden.

Im Verfahrensschritt (iii) kann die destillative Aufarbeitung bei einem Druck zwischen 1 bis 1500 mbar_{abs} erfolgen, bevorzugt ist ein Druck von 100 bis 1000 mbar_{abs}, besonders bevorzugt von 100 bis 500 mbar_{abs}. Des Weiteren erfolgt im Verfahrensschritt (iii) die destillative Aufarbeitung der umgesetzten Zusammensetzung bei Kopftemperaturen im Bereich von 40 bis 250 °C, vorzugsweise von 50 bis 150 °C, besonders bevorzugt von 50 bis 100 °C.

Der Ozonisator wird bevorzugt als Closed-Loop-Reaktor betrieben. Aus dem Prozess wird das Reinprodukt bevorzugt abgezogen. Neben Brom, Jod und brom- und jodhaltigen Verbindungen wird ferner N₂ abgetrennt. Das Restgas, dass das HCl enthält, wird zurückgeführt.

Für die bekannten Prinzipien der Gasentladung und der Plasma-Chemie wird auf die einschlägige Fachliteratur verwiesen: beispielsweise von A.T. Bell "Fundamentals of Plasma Chemistry" ed. J.R. Hollahan und A.T. Bell, Wiley, New York (1974).

Das nicht-thermische Plasma weist vorzugsweise eine Leistungsdichte auf von 0,1 bis 50 W/cm³, insbesondere von 1 bis 20 W/cm³, bevorzugt sind 2 bis 15 W/cm³, weiter bevorzugt um 10 W/cm³ mit plus/minus 2,5 W/cm³. Die Erzeugung des nicht-thermischen Plasmas erfolgt in der Regel in einem Rohrreaktor, insbesondere in einem Glasrohrreaktor, bevorzugt in einem Quarzglasrohrreaktor.

Gleichfalls Gegenstand der Erfindung ist die Verwendung eines nicht-thermischen Plasmas zur Abtrennung von Brom, Brom und/oder Jod enthaltenden Verbindungen, insbesondere von Brom und/oder Jod enthaltenden Silicium-Verbindungen, aus Zusammensetzungen von Chlorsilanen.

Nicht umgesetzte Brom, Jod, Brom und/oder Jod enthaltende Silicium-Verbindungen werden nach Bedarf dem nichtthermischen Plasma erneut zugeführt. Zur vollständigen Umsetzung der Verbindungen kann eine Zyklusfahrweise mit 1 bis 100 Zyklen genutzt werden, bevorzugt ist eine geringe Anzahl von 1 bis 5 Zyklen, vorzugsweise wird nur ein Zyklus durchlaufen.

Das nichtthermische Plasma wird in einem Plasma-Reaktor erzeugt, in dem eine plasmaelektrische Stoffumwandlung induziert wird und basiert auf anisothermen Plasmen. Für diese Plasmen ist eine hohe Elektronentemperatur Tₑ ≥ 10⁴ K und relativ niedrige Gastemperatur T_{G} ≤ 10³ K charakteristisch. Die für die chemischen Prozesse notwendige Aktivierungsenergie erfolgt überwiegend über Elektronenstöße (plasmaelektrische Stoffumwandlung). Typische nichtthermische Plasmen können beispielsweise durch Glimmentladung, HF-Entladung, Hohlkathodenentladung oder Koronarentladung erzeugt werden. Der Arbeitsdruck, bei dem die erfindungsgemäße Plasmabehandlung durchgeführt wird, liegt zwischen 1 bis 1000 mbar_{abs}, bevorzugt bei 1 bis 800 mbar_{abs}, besonders bevorzugt bei 100 bis 500 mbar_{abs}, insbesondere bei 200 bis 500 mbar_{abs}, wobei die zu behandelnde Phase vorzugsweise auf eine Temperatur von -40 °C bis 200 °C, besonders bevorzugt auf 20 bis 80 °C, ganz besonders bevorzugt auf 40 bis 60 °C eingestellt ist. Bei Germaniumverbindungen kann die entsprechende Temperatur auch höher liegen.

Für die Definition des nichtthermischen Plasmas und der homogenen Plasmakatalyse wird auf die einschlägige Fachliteratur verwiesen, wie beispielsweise auf "Plasmatechnik: Grundlagen und Anwendungen - Eine Einführung; Autorenkollektiv, Carl Hanser Verlag, München/Wien; 1984, ISBN 3-446-13627-4".

Erfindungsgemäß kann die Aufarbeitung kontinuierlich in einem Kolonnensystem mit mindestens einer Kolonne erfolgen, bevorzugt in einem System mit mindestens zwei Kolonnen. Auf diese Weise kann beispielsweise das ebenfalls bei der Reaktion gebildete Chlorwasserstoffgas (HCl) über eine so genannte Leichtsiederkolonne über Kopf, erste Kolonne, abgetrennt und das aus dem Sumpf aufgefangene Gemisch in seine Bestandteile aufgetrennt werden, indem Siliciumtetrachlorid (SiCl₄) am Kopf einer zweiten Kolonne und Höhersieder, wie beispielsweise Hexachlordisilan (Si₂Cl₆), am Kopf einer dritten Kolonne destillativ abgetrennt werden; gegebenenfalls kann zur Abtrennung des Octachlortrisilans eine vierte Kolonne zugeschaltet werden. Auf diese Weise kann das aus dem Plasmareaktor erhaltene Reaktionsgemisch durch Rektifikation weiter aufgetrennt werden.

Ferner können in der Vorrichtung neben dem Reaktor auch ein oder mehrere weitere Reaktoren zum Einsatz kommen, die in Reihe oder parallel geschaltet werden. Erfindungsgemäß ist mindestens ein Reaktor der Vorrichtung ein Ozonisator. Ein großer Vorteil besteht in der alternativ möglichen Verwendung von handelsüblichen Ozonisatoren, so dass die Investitionskosten wesentlich gesenkt werden. Die Reaktoren der Erfindung sind zweckmäßig mit Glasrohren, insbesondere mit Quarzglasrohren ausgestattet, wobei die Rohre bevorzugt parallel bzw. koaxial angeordnet und mittels Spacern aus inertem Material beabstandet sind. Als inertes Material eignet sich insbesondere Teflon oder Glas. Es ist bekannt, dass die eingekoppelte Elektronenenergie für die Plasmaentladung "E" abhängig vom Produkt aus Druck "p" und Elektrodenabstand "d" (p·d) ist. Für das erfindungsgemäße Verfahren liegt das Produkt aus Elektrodenabstand und Druck in der Regel im Bereich von 0,001 bis 300 mm·bar, vorzugsweise von 0,05 bis 100 mm·bar, besonders bevorzugt bei 0,08 bis 0,3 mm·bar, insbesondere bei 0,1 bis 0,2 mm·bar. Die Entladung kann mittels verschiedenartiger Wechselspannungen oder gepulster Spannungen von 1 bis 10⁶ V angeregt werden. Gleichfalls kann der Kurvenverlauf der Spannung u. a. rechteckig, trapezförmig, gepulst oder stückweise aus einzelnen zeitlichen Verläufen zusammengesetzt sein. Besonders geeignet sind pulsförmige Anregungsspannungen, sie ermöglichen eine gleichzeitige Ausbildung der Entladung im gesamten Entladungsraum des Reaktors. Die Impulsdauer beim Pulsbetrieb richtet sich nach dem Gassystem, sie liegt bevorzugt zwischen 10 ns und 1ms. Bevorzugte Spannungsamplituden liegen bei 10 Vp bis 100 kVp, bevorzugt 100 Vp bis 10 Vp, insbesondere bei 50 bis 5 Vp, in einem Mikrosystem. Die Frequenz der Wechselspannung kann zwischen 10 MHz und 10 ns-Impulsen (Tastverhältnis 10:1) bis zu niedrigen Frequenzen im Bereich von 10 bis 0,01 Hz eingestellt werden. Beispielsweise kann am Reaktor eine Wechselspannung mit einer Frequenz von 1,9 kHz und einer Amplitude von 35 kV "Peak to Peak" angelegt werden. Der Leistungseintrag beträgt ungefähr 40 W.

Das folgende Beispiel erläutert das erfindungsgemäße Verfahren näher, ohne die Erfindung auf dieses Beispiel zu beschränken.

### Beispiel 1:

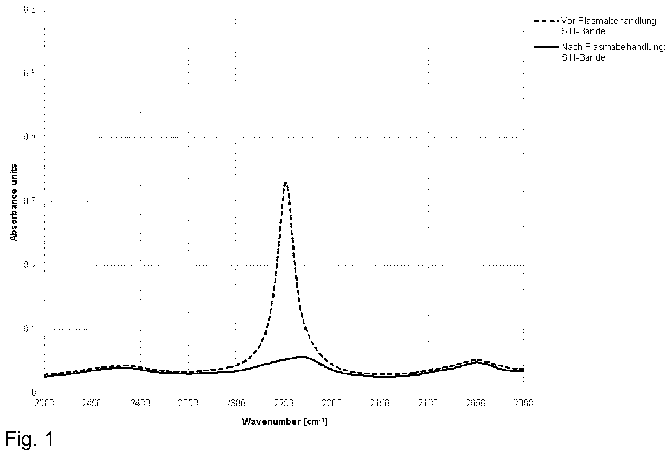

4 Liter eines produktionsbedingt mit Bromsilanen oder Bromhalogensilanen verunreinigtes SiCl₄ (Figur 1) wurde in die Blase einer Destillationskolonne (durch Unterdruck) überführt. Das SiCl₄ wurde bei einem Rücklaufverhältnis von 1 : 10 von HCl sowie Silanol befreit, siehe Figur 1 (SiH-Bande des BrCl₂SiH vor der Plasmabehandlung). Der Gehalt an Brom wird über die SiH-Bande ermittelt (Gehalt Brom: 11,5 Gew.-ppm).

Die Destillation erfolgte diskontinuierlich in einer Destillationsapparatur mit einer 1,1 m Kolonne mit Sulzer-Metallpackung 30 mm. Bei einer Sumpftemperatur von etwa 57 °C und einem Druck von 750 mbar_{abs} wird Siliciumtetrachlorid abdestilliert und bei etwa -10 °C aufgefangen. Dieses Destillat zeigt in der In-Prozess-Kontrolle im FT-IR-Spektrum deutliche Anteile von bromierten Silanen, wie BrCl₂SiH, siehe Figur 1 (SiH-Bande vor Plasmabehandlung).

Das so gewonnene Destillat umfassend Siliciumtetrachlorid (SiCl₄) wurde kontinuierlich verdampft und in ein nichtthermisches Plasma einer Gasentladungsstrecke eines Quarzglasreaktors (Plasma-Mikroreaktor (Gap ca. 1mm)) geführt. Die Gasphase wurde mit circa 250 ml/h durch den Reaktor geführt. Während die Gasphase durch den gläsernen Plasmareaktor strömte, wurde eine Wechselspannung mit einer Frequenz von 1,9 kHz und eine Amplitude von 35 kV "Peak to Peak" angelegt. Der Leistungseintrag in den Reaktor betrug etwa 40 W (Primärleistung). Der Betriebsdruck wurde auf etwa 350 mbar eingestellt. Der Plasmareaktor wurde als "Closed-Loop-Reaktor" betrieben. Das erhaltende Kondensat wurde in die Blase der Destillationskolonne abgelassen und (bei den gleichen Bedingungen wie zuvor) destilliert. Das FT-IR-Spektrum des Destillates weist die zuvor genannten Verunreinigungen nicht mehr auf, siehe Figur 1 (SiH-Bande nach Plasmabehandlung). Die Brom enthaltende BrCl₂SiH Verbindung ist nicht mehr nachweisbar. Der Nachweis des BrCl₂SiH wird über die Bestimmung der Si-H-Bande des BrCl₂SiH im IR-Sprektrum vorgenommen und entsprechend auf den Gehalt an Brom umgerechnet. Die Messmethode ist FT-IR mit einer Schichtdicke von 1000 mm, STC bei Normalbedingungen (Flüssig, 20 °C, 1 bar abs.).

Es wird angenommen, dass durch die Plasmabehandlung im Plasma Cl-Minus Ionen gebildet werden, die mit den bromierten Silanverbindungen reagieren und diese zu destillativ einfach von SiCl₄ abtrennbaren Verbindungen umsetzen, indem das Brom substituiert wird.

Reaktorgeometrie: Entladungsstrecke: 10 cm, Radius Ringspalt: 0,6 cm Durchmesser Reaktor: 1,2 cm; Gap/Spaltweite: 1 mm

### Beispiel 2:

Die Durchführung des Beispiels erfolgte analog zu Beispiel 1 mit der Abweichung, dass 9,7 Gew.-ppm an Brom enthaltender Verbindung nach der Destillation erhalten wurden. Das Destillat wird wie vorstehend beschrieben einer Plasmabehandlung unterzogen und anschließend destilliert. Das so gewonnene Destillat hat einen Gehalt an Brom von kleiner 0,05 Gew.-ppm.

Die Erfindung wird im Folgenden anhand des in der Figur dargestellten Ausführungsbeispiels näher erläutert. Es stellt dar:
Figur 1: FT-IR-Spektrum mit BrCl₂SiH vor einer Plasmabehandlung und nach der Plasmabehandlung und erneuter Destillation. BrCl₂SiH konnte effizient entfernt werden (kleiner gleich 0,05 Gew.-ppm Brom).

## Patentansprüche

1. Verfahren zur Abtrennung von Brom, Brom und/oder Jod enthaltenden Silicium-Verbindungen der allgemeinen Formel **III**
SiHal₄₋ₙHₙ (**III**)
aus Zusammensetzungen von Chlorsilanen, wobei die Chlorsilane umfassen
- mindestens ein Chlorsilan der allgemeinen Formel **I**
SiCl₄ (**I**),
- Polyperchlorsilane der allgemeinen Formel **II** 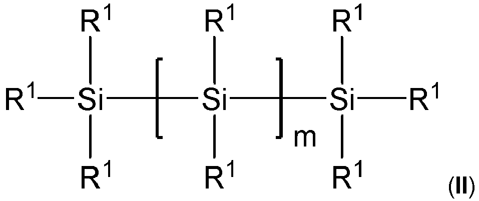 mit R¹ jeweils Chlor und mit m = 0, 1, 2, 3, 4 bis 100,
- verzweigte Polyperchlorsilane und/oder cyclische Polyperchlorsilane und/oder Gemische der vorgenannten Chlorsilane,
indem
(i) die Zusammensetzung von Chlorsilanen in den gasförmigen Zustand überführt wird und
(ii) einem nichtthermischen Plasma ausgesetzt wird und eine umgesetzte Zusammensetzung von Chlorsilanen erhalten wird,
(iii) Destillieren der umgesetzten Zusammensetzung von Chlorsilanen, und
(iv) Erhalten einer Zusammensetzung von Chlorsilanen deren Gehalt an Brom, Brom und/oder Jod enthaltenden Silicium-Verbindungen vermindert ist.

2. Verfahren nach Anspruch 1,
**dadurch gekennzeichnet,**
**dass** der Verfahrensschritt (ii) die nichtthermische Plasmabehandlung bei Drücken von 1 bis 1000 mbar_{abs} erfolgt.

3. Verfahren nach einem der Ansprüche 1 oder 2,
**dadurch gekennzeichnet,**
**dass** Siliciumtetrachlorid der allgemeinen Formel **I** mit n = 0 und/oder Hexadichlorsilan der Formel **II** mit n = 0 einem nichtthermischen Plasma ausgesetzt wird.

4. Verfahren nach Anspruch 3,
**dadurch gekennzeichnet,**
**dass** die Brom und/oder Jod enthaltenden Silicium-Verbindungen Halogensilane der allgemeinen Formel **III**
SiHal₄₋ₙHₙ (**III**)
entsprechen, wobei mindestens ein Hal ausgewählt ist aus Brom und Jod und optional weitere Hal jeweils unabhängig ausgewählt sind aus Chlor, Brom und Jod mit n = 0, 1, 2 oder 3.

5. Verfahren nach einem der Ansprüche 1 bis 4,
**dadurch gekennzeichnet,**
**dass** die Brom und/oder Jod enthaltenden Silicium-Verbindungen Halogensilane der allgemeinen Formel **III** HSiCl₂Br oder HSiClBr₂ sind.

6. Verfahren nach einem der Ansprüche 1 bis 5,
**dadurch gekennzeichnet,**
**dass** Verfahrensschritte (ii) und optional (iii) kontinuierlich erfolgen.

7. Verfahren nach einem der Ansprüche 1 bis 6,
**dadurch gekennzeichnet,**
**dass** sich die umgesetzten Brom und/oder Jod enthaltenden Silicium-Verbindungen im Verfahrensschritt (iii) in einem Auffangbehälter einer Vorrichtung zur Durchführung des Verfahrens anreichern.

8. Verfahren nach einem der Ansprüche 1 bis 7,
**dadurch gekennzeichnet,**
**dass** im Verfahrensschritt (iii) die destillative Aufarbeitung bei einem Druck zwischen 1 bis 1500 mbar_{abs} erfolgt.

9. Verfahren nach einem der Ansprüche 1 bis 8,
**dadurch gekennzeichnet,**
**dass** im Verfahrensschritt (iii) die destillative Aufarbeitung der umgesetzten Zusammensetzung bei Kopftemperaturen im Bereich von 40 bis 250 °C erfolgt.

10. Verfahren nach einem der Ansprüche 1 bis 9,
**dadurch gekennzeichnet, dass** das Plasma ein nicht-thermisches Plasma ist, insbesondere weist das Plasma eine Leistungsdichte von 1 bis 20 W/cm³ auf.

11. Verfahren nach einem der Ansprüche 1 bis 10,
**dadurch gekennzeichnet,**
**dass** die Zusammensetzung im Verfahrensschritt (iv) kleiner gleich 1 Gew.-ppm an Brom und/oder Jod aufweist.

12. Verfahren nach einem der Ansprüche 1 bis 11,
**dadurch gekennzeichnet,**
**dass** nicht-thermische Plasma in einem Rohrreaktor erzeugt wird, insbesondere in einem Glasrohreaktor, bevorzugt in einem Quarzglasrohrreaktor.

13. Verwendung eines nicht-thermischen Plasmas zur Abtrennung von Brom, Brom und/oder Jod enthaltenden Silicium-Verbindungen aus Zusammensetzungen von Chlorsilanen.
